(19) Europäisches Patentamt

European Patent Office

Office européen des brevets

(11) Veröffentlichungsnummer: **0 406 717 A2**

# (12) EUROPÄISCHE PATENTANMELDUNG

(21) Anmeldenummer: 90112423.0

(22) Anmeldetag: 29.06.90

(51) Int. Cl.⁵: **G02B 26/10, H04N 3/09**

(30) Priorität: 01.07.89 DE 3921763

(43) Veröffentlichungstag der Anmeldung:
**09.01.91 Patentblatt 91/02**

(84) Benannte Vertragsstaaten:
**CH DE FR GB IT LI NL SE**

(71) Anmelder: **Menke, Josef-Ferdinand, Dipl.-Ing.**
**Fördestrasse 27**
**D-2392 Glücksburg(DE)**

(72) Erfinder: **Menke, Josef-Ferdinand, Dipl.-Ing.**
**Fördestrasse 27**
**D-2392 Glücksburg(DE)**

(54) Verfahren zur Schwarzwertklemmung in Infrarotscannern.

㊗ Es wird ein Verfahren zur Schwarzwertklemmung für Infrarotscanner, deren Rotationsachse parallel zur optischen Achse von Ein- und Ausspiegelung liegt, beschrieben. Zwischen den einzelnen, ringförmig angeordneten Reflexionskörpern sind schwarze Flächen angeordnet, auf die der Detektor vor und nach jeder Zeilenabtastung sieht. Für die Reflexionskörper kommen Spiegel und Prismen jeder geeigneten Art in Frage. Die Größe der schwarzen Flächen wird so gewählt, daß sie der Totzeit des Systems entspricht.

## Fig. 1

Reflexionskörper

Klemmfläche

EP 0 406 717 A2

# VERFAHREN ZUR SCHWARZWERTKLEMMUNG IN INFRAROTSCANNERN

Die Erfindung betrifft ein Verfahren zur Schwarzwertklemmung in Infrarotscannern, deren Rotationsachse parallel zur optischen Achse von Ein- und Ausspiegelung liegt und schwarze Flächen zwischen den einzelnen, ringförmig angeordneten Reflexionskörpern besitzt, auf die der Detektor vor und nach jeder Zeilenabtastung sieht.

Verfahren zur Schwarzwertklemmung sind z. B. aus der Fernsehtechnik hinreichend bekannt. Üblicherweise wird dort die Klemmung an Hand vorhandener elektrischer Signale realisiert. Auch bei Infrarotscannern sind Verfahren zur Schwarzwertklemmung bekannt, wie z. B. in der Europäischen Patentschrift Nr. 0051274 beschrieben. Diese Verfahren beziehen sich aber ausnahmslos auf Blenden, die im Strahlengang zwischen Detektor und senkrecht zur optischen Achse rotierenden Scannern angeordnet sind.

Der Erfindung liegt die Aufgabe zugrunde, eine Schwarzwertklemmung für parallel zur optischen Achse rotierende Scanner zu realisieren. In diesem Fall sollen, statt einer Blende im Strahlengang, zwischen jedem Reflexionskörper des Scanners schwarze Flächen angebracht werden. Die Größe dieser Flächen sollte genau so gewählt werden, daß der Detektor während der gesamten Totzeit, also der Zeit, die nicht zum Bildaufbau genutzt wird, auf diese Flächen sieht. So trifft während der Totzeit definierte Strahlung auf den Detektor, die als Referenzstrahlung für die Schwarzwertklemmung dienen kann.

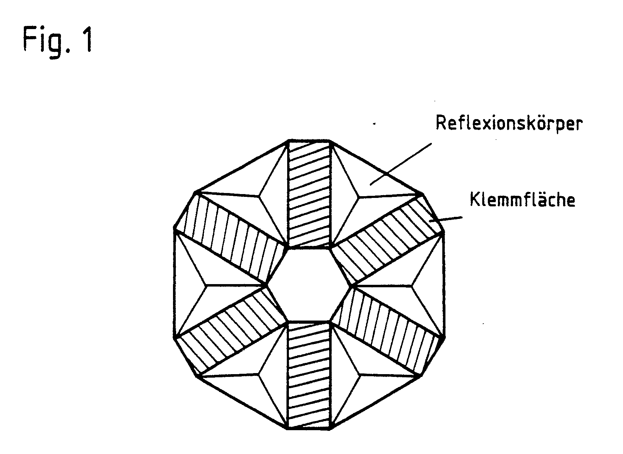

In Figur 1 ist die Anordnung der Reflexionskörper und der Klemmflächen am Ausführungsbeispiel eines Tripelspiegelscanners dargestellt. Die Rotationsachse liegt hier senkrecht zur Papierebene.

**Ansprüche**

1. Verfahren zur Schwarzwertklemmung in Infrarotscannern, deren Rotationsachse parallel zur optischen Achse von Ein- und Ausspiegelung liegt, dadurch gekennzeichnet, daß sich zwischen den einzelnen, ringförmig angeordneten Reflexionskörpern eine schwarze Fläche befindet, auf die der Detektor vor und nach jeder Zeilenabtastung sieht.

2. Verfahren nach Anspruch 1, dadurch gekennzeichnet, daß als Reflexionskörper alle nur denkbaren Anordnungen zugelassen sind, wie z. B. Spiegel in allen möglichen Varianten und Prismen jeder möglichen Art.

Fig. 1

Reflexionskörper

Klemmfläche